# EUROPÄISCHE PATENTANMELDUNG

(11) **EP 4 180 695 A1**
(43) Veröffentlichungstag der Anmeldung: **17.05.2023**
(21) Anmeldenummer: 21207659.0
(22) Anmeldetag: 11.11.2021
(51) Int. Cl.: F16K 1/22, F16K 1/226

(54) **FREISTELLUNG ABSPERRKLAPPE**

(71) Anmelder: Georg Fischer Rohrleitungssysteme AG, 8201 Schaffhausen (CH)
(72) Erfinder: Buergi, Stefan, 8254 Basadingen (CH); Ebauer, Alexander, 8200 Schaffhausen (CH); Jaeckle, Timo, 78247 Hilzingen (DE); Mayer, Lars, 78224 Singen (DE)
(74) Vertreter: Fenner, Seraina

(57) **Zusammenfassung**

Absperrklappe zum Absperren oder Regeln eines Rohrleitung durchströmenden Mediums in einer Rohrleitung beinhaltend, ein Gehäuse aus Kunststoff mit einer Gehäusebreite, einem Gehäusehals und einem Gehäusefuss, einen an einer Achse formschlüssig angeordneten Teller zum schwenkbaren Öffnen und Schliessen der Absperrklappe, eine durch den Teller hindurch verlaufende Achse, eine im Gehäuse angeordnete Manschette zur Abdichtung der Absperrklappe in geschlossenem Zustand, wobei die Manschette konzentrisch in einer Manschettenaufnahmeöffnung im Gehäuse angeordnet ist, wobei die Manschette und das Gehäuse einen ringförmigen Übergangsbereich aufweisen, wobei der Übergangsbereich durch einen jeweils beidseitig an der Manschette angeordneten, den Aufnahmedurchmesser der Manschettenaufnahme überragenden, Bund und einen beidseitig, konzentrisch im Gehäuse angeordneten Gehäuseversatz zur Aufnahme des Bunds und der daraus resultierenden reduzierten Gehäusebreite, gebildet ist, wobei die Achse in einer Durchgangsbohrung im Gehäuse im Bereich des oberen Übergangsbereichs nahe dem Gehäusehals ohne Flächenkontakt zum Gehäuse oder einem anderen Bauteil der Absperrklappe ist.

## Beschreibung

Die Erfindung betrifft eine Absperrklappe zum Absperren oder Regeln eines Rohrleitung durchströmenden Mediums in einer Rohrleitung beinhaltend, ein Gehäuse aus Kunststoff mit einer Gehäusebreite, einem Gehäusehals und einem Gehäusefuss, eine an einer Achse formschlüssig angeordneten Teller zum schwenkbaren Öffnen und Schliessen der Absperrklappe, eine durch den Teller hindurch verlaufende Achse, eine im Gehäuse angeordnete Manschette zur Abdichtung der Absperrklappe in geschlossenem Zustand, wobei die Manschette konzentrisch in einer Manschettenaufnahmeöffnung im Gehäuse angeordnet ist, wobei die Manschette und das Gehäuse einen ringförmigen Übergangsbereich aufweisen, wobei der Übergangsbereich durch einen jeweils beidseitig an der Manschette angeordneten, den Aufnahmedurchmesser überragenden, Bund und einen beidseitig, konzentrisch im Gehäuse angeordneten Gehäuseversatz zur Aufnahme des Bunds und der daraus resultierenden, reduzierten Gehäusebreite gebildet ist.

Im Rohrleitungsbau werden Absperrklappen eingesetzt um Rohrleitungen, die flüssige oder gasförmige Medien transportieren, zu schliessen bzw. den Durchfluss zu regeln. Dazu ist es wichtig, dass die Absperrklappe, insbesondere das Gehäuse, auch an den dünnsten Stellen dem Druck über lange Zeit sowie über viele Stellzyken standhält. Durch den hohen Druck auf den Teller in geschlossenem Zustand verbiegt sich die Achse, wodurch sich die Auflagefläche der Achse im Gehäuse auf einen Punkt- oder Linienauflage an der schwächsten bzw. dünnsten Stelle des Gehäuses verlagert. Dadurch ergibt sich eine Überlastung da die Kraft nicht mehr im Lagerbereich der Achse auf die Fläche verteilt wird, sondern sie wirkt an einer konzentrierten Stelle im Übergangsbereich an der dünnsten Stelle des Gehäuses auf eine Punkt- oder Linienauflage, wodurch Spannungsrisse entstehen können. Deshalb weisen Absperrklappen aus Kunststoff bisher eine lange Bauform bzw. ein breites Gehäuse auf damit sie dem Druck bei geschlossenem Teller, welcher eine hohe Auflagekraft aufgrund der Achsdurchbiegung im Übergangsbereich verursacht, standhalten, da bei langen Gehäusebauformen die dortige Wandstärke des Gehäuses um ein vielfaches dicker ist.

In der US 2019/0128426 A1 ist eine Absperrklappe mit einem breiten Gehäuse aufgezeigt. Nachteilig an einer solchen breiten Absperrklappe ist der grosse Platzbedarf in einer Rohrleitung den es bedarf, deshalb werden oft auch in Kunststoffrohrleitungssystemen Absperrklappen aus Metall eingesetzt, die eine kurze bzw. schmale Bauform aufweisen, da aufgrund des Werkstoffs Metall das Gehäuse dem Druck standhält, auch mit einem schmalen Gehäuse. Jedoch sind metallische Absperrklappen nicht für alle Medien geeignet.

Es ist Aufgabe der Erfindung eine Absperrklappe aus Kunststoff vorzuschlagen, die eine schmale Bauform aufweist und den zugelassenen Drücken gemäss den anzuschliessenden Rohrleitungen standhält.

Diese Aufgabe wird erfindungsgemäss dadurch gelöst, dass die Achse in einer Durchgangsbohrung im Gehäuse im Bereich des oberen Übergangsbereichs nahe dem Gehäusehals ohne Flächenkontakt zum Gehäuse oder einem anderen Bauteil der Absperrklappe ist.

Die erfindungsgemässe Absperrklappe zum Absperren oder Regeln eines Rohrleitung durchströmenden Mediums in einer Rohrleitung beinhaltet, ein vorzugsweise einteiliges Gehäuse aus Kunststoff, wobei das Gehäuse eine Gehäusebreite, einen Gehäusehals und einen Gehäusefuss aufweist. Die Gehäusebreite entspricht einer Breite, die eine kurze Einbaulänge gemäss der Norm DIN EN 558 Baulänge FTF Grundreihe 20 entspricht. Im Gehäusehals wie auch im Gehäusefuss ist die einteilige Achse gelagert. Die Absperrklappe weist zudem einen an einer Achse formschlüssig angeordneten Teller zum schwenkbaren Öffnen und Schliessen der Absperrklappe auf. Die Achse verläuft zentrisch oder exzentrisch durch den Teller hindurch und ist im Gehäusehals wie auch im Gehäusefuss gelagert angeordnet. Die erfindungsgemässe Absperrklappe weist eine im Gehäuse angeordnete Manschette zur Abdichtung der Absperrklappe in geschlossenem Zustand auf. Die Manschette ist konzentrisch in einer Manschettenaufnahmeöffnung im Gehäuse angeordnet. Die Manschette ist einteilig ausgebildet und weist an den beiden Stirnseiten einen Bund auf. Die Manschette und das Gehäuse bilden einen ringförmigen Übergangsbereich an der Absperrklappe, wobei der Übergangsbereich durch den jeweils beidseitig an der Manschette angeordneten, den Aufnahmedurchmesser überragenden Bund und einen beidseitig, konzentrisch im Gehäuse angeordneten Gehäuseversatz zur Aufnahme des Bunds und der daraus resultierenden reduzierten Gehäusebreite, gebildet ist. Der Übergangsbereich schliesst konzentrisch an die Manschettenaufnahmeöffnung des Gehäuses an und erstreckt sich ringförmig darum herum. Im Übergangsbereich ist im Querschnitt der Absperrklappe gut ersichtlich, wie der Bund der Manschette das Gehäuse überlagert, was eine reduzierte Gehäusebreite aufgrund der beidseitig angeordneten Gehäuseversatze im Übergangsbereich zur Folge hat. Die Achse, welche sich durch eine Durchgangsbohrung im Gehäuse erstreckt, weist im Bereich des oberen Übergangsbereichs nahe dem Gehäusehals in der Durchgangsbohrung keinen Flächenkontakt zum Gehäuse oder einem anderen Bauteil der Absperrklappe auf. Dadurch kontaktiert die Achse das Gehäuse erst am ganzen Umfang bzw. der Mantelfläche mit den Achsabschnitten der Achse ausserhalb des oberen Übergangsbereichs. Es bildet sich dementsprechend ein Ringspalt zwischen dem Umfang der Achse und dem Umfang der Durchgangsbohrung. Dadurch wird erzielt, dass bei einer Durchbiegung der Achse bei geschlossener Absperrklappe und Druckbelastung durch das Medium auf den Teller, die Auflage der Achse in den Bereich ausserhalb des Übergangsbereichs verlagert wird, wo das Gehäuse die Gehäusebreite und nicht mehr nur die reduzierte Gehäusebreite aufweist. Somit weist die Achse in der Durchgangsbohrung im Bereich der reduzierten Gehäusebreite keinen Flächenkontakt auf.

Bis auf den Übergangsbereich nahe dem Gehäusehals weist die Achse einen durchgehenden Flächenkontakt zwischen ihrer Mantelfläche und dem Gehäuse oder der Manschette oder dem Teller auf, wobei an manchen Stellen eine Dichtung dazwischenliegt.

Als vorteilhaft hat sich gezeigt, wenn die Durchgangsbohrung im Gehäuse im Bereich des oberen Übergangsbereichs nahe dem Gehäusehals einen grösseren Umfang als die Achse in diesem Bereich aufweist, wodurch ein Flächenkontakt vermieden wird. Dadurch wird ein Abstand zwischen der Achse und der Durchgangsbohrung im Gehäuse erzielt bzw. ein Ringspalt gebildet, wodurch die Achse erst oberhalb des Übergangsbereichs wieder direkten Kontakt mit dem Gehäuse hat, wodurch sich die Auflagepunkte der Achse beim Durchbiegen in den Bereich in dem das Gehäuse die maximale Gehäusebreite aufweist, verschiebt.

Es ist vorteilhaft, wenn die Durchgangsbohrung im Gehäuse im Bereich des oberen Übergangsbereichs nahe dem Gehäusehals eine grössere Querschnittsfläche als die Achse in diesem Bereich aufweist, wodurch ein Flächenkontakt vermieden wird.

Als bevorzugte Ausführungsform hat sich gezeigt, wenn die Achse im Gehäusehals bis hin zum Übergangsbereich gelagert und abgedichtet ist. Das heisst, in diesem Bereich hat die Achse Kontakt mit dem Gehäuse bis hin zum Übergangsbereich wo kein Kontakt mehr vorliegt bis zur Durchgangsbohrung in der Manschette wo die Achse dann wieder Kontakt hat.

Als bevorzugte Ausführungsform hat sich gezeigt, wenn die Achse im Übergangsbereich nahe dem Gehäusehals eine Querschnittsverjüngung aufweist, dadurch wird erreicht, dass im Übergangsbereich zwischen Achse und Gehäuse kein Kontakt mehr vorliegt.

Als vorteilhaft hat sich gezeigt, wenn die Achse einteilig ausgebildet ist und vom Gehäusehals bis in den Gehäusefuss durchgehend verläuft. Dadurch kann die Achse durch ein einfaches Durchstecken durch die Absperrklappe montiert werden.

Gemäss einer bevorzugten Ausführungsform ist die Durchgangsbohrung im Übergangsbereich nahe dem Gehäusehals oval ausgebildet und die Achse im Übergangsbereiche weist eine runde Querschnittsfläche auf oder umgekehrt. Dadurch wird erreicht, dass bei einer Durchbiegung der Achse, die Achse in der Durchgangsbohrung im Übergangsbereich auf zwei Linienauflagen im Gehäusezentrum aufliegt und nicht mehr nur auf einer Linie an der dünnsten und schwächsten Stelle im Gehäuse bzw. bei der Stirnseite des Gehäuses.

Als bevorzugte Ausführung hat sich gezeigt, wenn im Übergangsbereich nahe dem Gehäusehals zwischen der Durchgangsbohrung und der Achse ein Ringspalt vorliegt. Dieser gewährt, dass keine Kontaktfläche zwischen Achse und Durchgangsbohrung im Übergangsbereich vorliegt.

Alle Ausgestaltungmöglichkeiten sind untereinander frei kombinierbar.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: eine Schnittansicht durch eine erfindungsgemässe Absperrklappe,
- Fig. 2: einen vergrösserten Ausschnitt im oberen Übergangsbereich,
- Fig. 3: möglich Ausführungsformen der Achse und des Gehäuses im Übergangsbereich bei der Durchgangsbohrung und
- Fig. 4: eine weitere Ausführungsform einer Achse und eines Gehäuses im Übergangsbereich und
- Fig. 5: eine Schnittansicht durch eine erfindungsgemässe Absperrklappe, wobei die Achse exzentrisch durch den Teller verläuft.

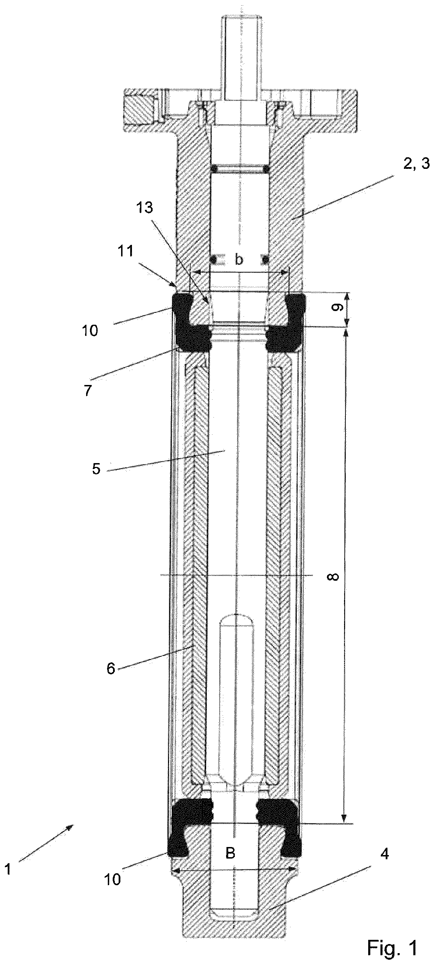

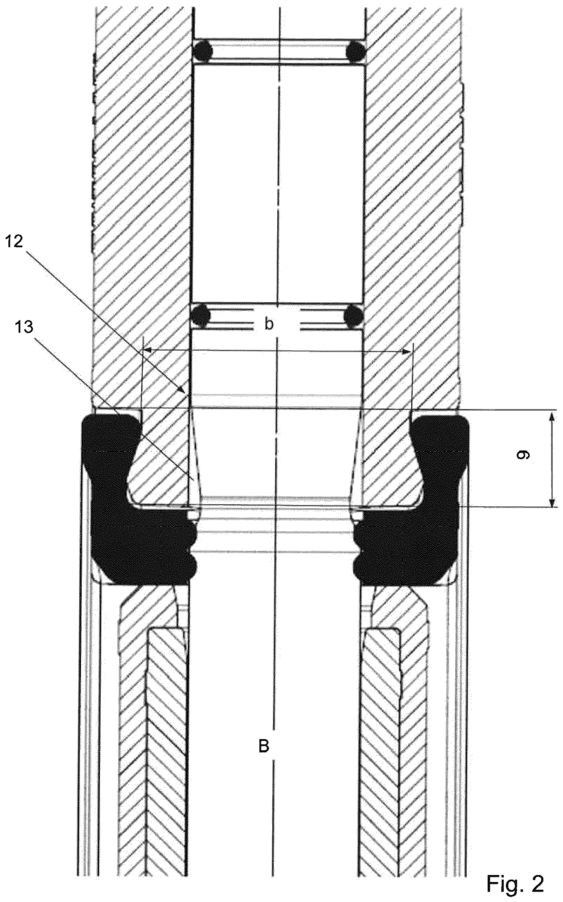

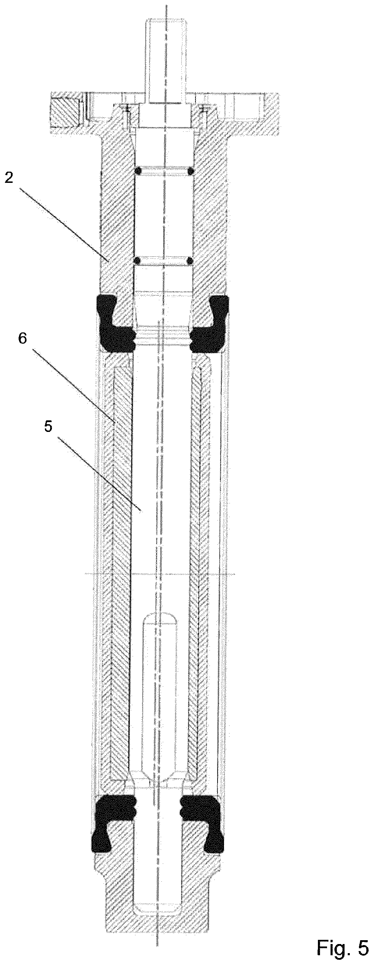

Die in Fig. 1 dargestellte Zeichnung zeigt eine Schnittansicht durch eine erfindungsgemässe Absperrklappe 1 zum Absperren und Regeln eines Rohrleitung durchströmenden Mediums in einer Rohrleitung. Die Absperrklappe 1 beinhaltet ein Gehäuse 2 aus Kunststoff. Das Gehäuse 2 weist einen Gehäusehals 3 und einen Gehäusefuss 4 auf, wobei die durchgehende Achse 5 im Gehäusehals 3 und im Gehäusefuss 4 gelagert ist. Die Absperrklappe 1 beinhaltet eine durchgehende Achse 5 und einen Teller 6, der an der Achse formschlüssig angeordnet ist. Die Achse 5 verläuft zentrisch durch den Teller 6 und ist im Gehäuse 2 gelagert, was in den Figuren 1 und 2 gut ersichtlich ist. In Fig. 5 ist ein exzentrischer Verlauf der Achse 5 durch den Teller 6 dargestellt Die erfindungsgemässe Absperrklappe 1 beinhaltet auch eine Manschette 7, wobei die Manschette 7 an beiden Stirnseiten einen überragenden Bund 10 aufweist. Der Bund der Manschette 7 wird im Gehäuse 2 im Gehäuseversatz konzentrisch aufgenommen. Durch die beiden stirnseitig am Gehäuse 2 angeordneten Gehäuseversatze 11 verringert sich in diesem Übergangsbereich 9, der sich ringförmig um die Manschettenaufnahmeöffnung 8 erstreckt, die Gehäusebreite B auf eine reduzierte Gehäusebreite b. Die Achse 5 verläuft durch eine Durchgangsöffnung 12 im oberen Übergangsbereich 9 nahe des Gehäusehalses 3. Es ist gut ersichtlich, dass in diesem Übergangsbereich 9 die Achse 5 keinen Kontakt mit dem Gehäuse 2 oder einem anderen Bauteil der Absperrklappe 1 aufweist. Vielmehr liegt dort ein grosser Ringspalt 13 zwischen der Mantelfläche der Achse 5 in diesem Abschnitt und der Durchgangsbohrung 12 vor, dies ist gut in der Detailansicht in Fig. 2 zu erkennen. Dies bringt den Effekt, dass bei der Durchbiegung der Achse 5, die Achse im Übergangsbereich 9 nicht auf das Gehäuse 2 drück bzw. dort nicht aufliegt, sondern die Auflage in den Bereich nach oben verlagert wird an eine Stelle an der das Gehäuse 2 wieder die maximale Gehäusebreite B aufweist und einer höheren Kraft standhält.

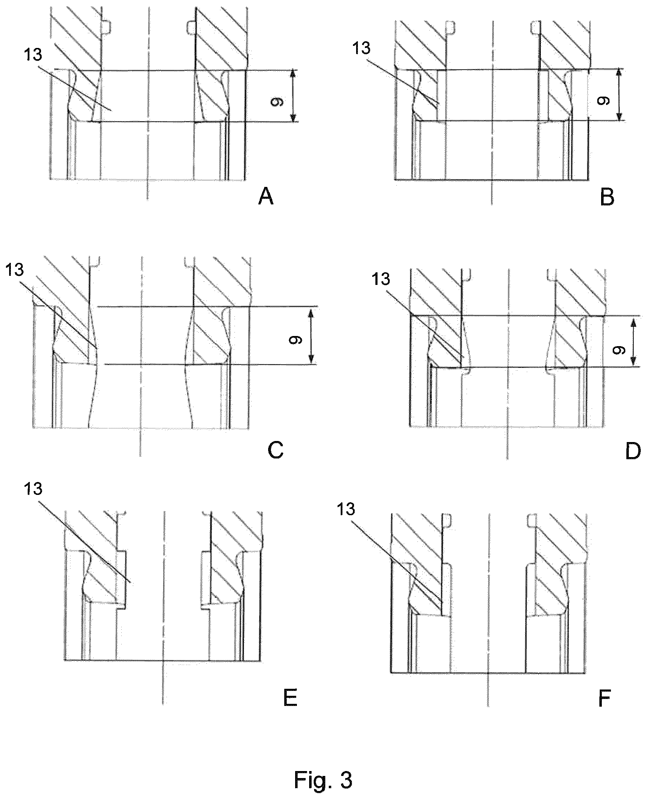

Fig. 3 stellt mögliche Ausführungsformen dar, wie ein Ringspalt 13 ausgestaltet sein kann, damit in der Durchgangsbohrung 12 im Übergangsbereich 9 keine rundum verlaufende Kontaktfläche zwischen dem Gehäuse 2 und der Achse 5 auftritt. Die Darstellungen A und B zeigen eine Erweiterung der Durchgangsbohrung 12 im Übergangsbereich 9. Darstellung A zeigt eine konusförmige Erweiterung des Querschnitts und Darstellung B eine abgesetzte Durchmesservergrösserung. Die Darstellungen C bis F zeigen zur Erzielung eines Ringspalts die Möglichkeit der Verjüngung der Achse 5 im Übergangsbereich 9 auf. Wobei das durch das Einbringen einer Kerbe wie in der Darstellung C oder das Anbringen eines Freistichs wie in der Darstellung D erreicht werden kann. Es kann auch durch das Anbringen eines Mehrkants vorzugsweise Vierkants im Übergangsbereich 9 umgesetzt werden, wie in Fig. E dargestellt. Oder auch eine konstante Verjüngung der Achse 5 ab dem Übergangsbereich 9 wie in Darstellung F gezeigt, ist denkbar.

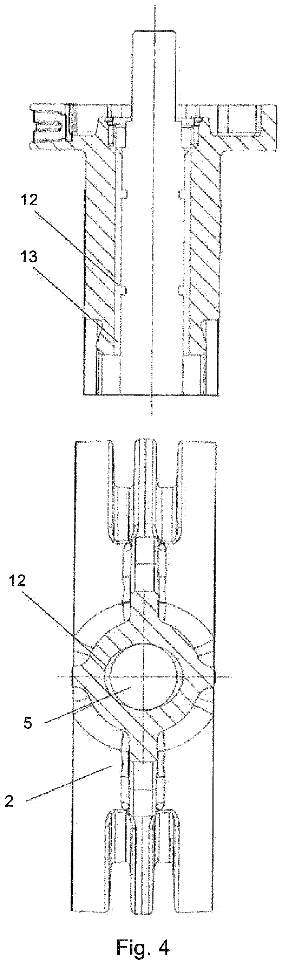

Fig. 4 zeigt eine weitere Ausführungsform der erfindungsgemässen Absperrklappe 1 auf. In der Schnittdarstellung durch die Achse 5 ist ersichtlich, dass die Durchgangsbohrung 12 oval ausgebildet ist und dadurch die Achse 5 nahe dem Gehäuserand nicht am Gehäuse 2 anliegt und dadurch in diesen beiden Bereichen zu den Stirnseiten hin der Absperrklappe 1, keinen Flächenkontakt aufweist.

Fig. 5 zeigt eine Ausführungsform einer erfindungsgemässen Absperrklappe 1 bei der die Achse 5 nicht zentrisch, sondern exzentrisch durch den Teller 6 verläuft. Dies ist gut dadurch ersichtlich, dass die eine Seite des Tellers 6 deutlich breiter ausgestaltet ist.

### Bezugszeichenliste

- 1: Absperrklappe
- 2: Gehäuse
- 3: Gehäusehals
- 4: Gehäusefuss
- 5: Achse
- 6: Teller
- 7: Manschette
- 8: Manschettenaufnahme
- 9: Übergangsbereich
- 10: Bund
- 11: Gehäuseversatz
- 12: Durchgangsbohrung
- 13: Ringspalt

- B: Gehäusebreite
- b: reduzierte Gehäusebreite

## Patentansprüche

1. Absperrklappe (1) zum Absperren oder Regeln eines Rohrleitung durchströmenden Mediums in einer Rohrleitung beinhaltend, ein Gehäuse (2) aus Kunststoff mit einer Gehäusebreite (B), einem Gehäusehals (3) und einem Gehäusefuss (4), einen an einer Achse formschlüssig angeordneten Teller (6) zum schwenkbaren Öffnen und Schliessen der Absperrklappe (1), eine durch den Teller (6) hindurch verlaufende Achse (5), eine im Gehäuse (2) angeordnete Manschette (7) zur Abdichtung der Absperrklappe (1) in geschlossenem Zustand, wobei die Manschette (7) konzentrisch in einer Manschettenaufnahmeöffnung (8) im Gehäuse (2) angeordnet ist, wobei die Manschette (7) und das Gehäuse (2) einen ringförmigen Übergangsbereich (9) aufweisen, wobei der Übergangsbereich (9) durch einen jeweils beidseitig an der Manschette (7) angeordneten, den Aufnahmedurchmesser der Manschettenaufnahme (8) überragenden, Bund (10) und einen beidseitig, konzentrisch im Gehäuse (2) angeordneten Gehäuseversatz (11) zur Aufnahme des Bunds (10) und der daraus resultierenden reduzierten Gehäusebreite (b), gebildet ist, **dadurch gekennzeichnet, dass** die Achse (5) in einer Durchgangsbohrung (12) im Gehäuse (2) im Bereich des oberen Übergangsbereichs (9) nahe dem Gehäusehals (3) ohne Flächenkontakt zum Gehäuse (2) oder einem anderen Bauteil der Absperrklappe (1) ist.

2. Absperrklappe (1) nach Anspruch 1, **dadurch gekennzeichnet, dass** die Durchgangsbohrung (12) im Gehäuse (2) im Bereich des oberen Übergangsbereichs (9) nahe dem Gehäusehals (3) einen grösseren Umfang als die Achse (5) in diesem Bereich aufweist, wodurch ein Flächenkontakt über den kompletten Umfang vermieden wird.

3. Absperrklappe (1) nach einem der Ansprüche 1 oder 2, **dadurch gekennzeichnet, dass** die Durchgangsbohrung (12) im Gehäuse (2) im Bereich des oberen Übergangsbereichs (9) nahe dem Gehäusehals eine grössere Querschnittsfläche als die Achse (5) in diesem Bereich aufweist, wodurch ein Flächenkontakt am Umfang im Bereich des oberen Übergangsbereichs (9) vermieden wird.

4. Absperrklappe (1) nach einem der Ansprüche 1 bis 3, **dadurch gekennzeichnet, dass** die Achse (5) im Gehäusehals (3) bis hin zum Übergangsbereich (9) gelagert und abgedichtet ist.

5. Absperrklappe (1) nach einem der Ansprüche 1 bis 4, **dadurch gekennzeichnet, dass** die Achse (5) im Übergangsbereich (9) nahe dem Gehäusehals (3) eine Querschnittsverjüngung aufweist.

6. Absperrklappe (1) nach einem der Ansprüche 1 bis 5, **dadurch gekennzeichnet, dass** die Durchgangsbohrung (12) im Übergangsbereich (9) nahe dem Gehäusehals (3) eine Querschnittserweiterung aufweist.

7. Absperrklappe (1) nach einem der Ansprüche 1 bis 6, **dadurch gekennzeichnet, dass** die Achse (5) einteilig ausgebildet ist und vom Gehäusehals (3) bis in den Gehäusefuss (4) durchgehend verläuft.

8. Absperrklappe (1) nach einem der Ansprüche 1 bis 7, **dadurch gekennzeichnet, dass** die Durchgangsbohrung (12) im Übergangsbereich (9) nahe dem Gehäusehals (3) oval ausgebildet ist und die Achse (5) im Übergangsbereich eine runde Querschnittsfläche aufweist oder umgekehrt.

9. Absperrklappe (1) nach einem der Ansprüche 1 bis 8, **dadurch gekennzeichnet, dass** im Übergangsbereich (9) nahe dem Gehäusehals (3) zwischen der Durchgangsbohrung (12) und der Achse (5) ein Ringspalt (13) vorliegt.
